# EUROPÄISCHE PATENTSCHRIFT

(11) **EP 0 457 755 B1**
(45) Veröffentlichungstag und Bekanntmachung des Hinweises auf die Patenterteilung: **04.01.1995**
(21) Anmeldenummer: 91890111.7
(22) Anmeldetag: 16.05.1991
(51) Int. Cl.: F16K 41/12

(54) **Membranventil**
Diaphragm valve
Soupape à diaphragme

(30) Priorität: 17.05.1990 AT 1097/90
(43) Veröffentlichungstag der Anmeldung: 21.11.1991
(73) Patentinhaber: BALIK GESELLSCHAFT m.b.H., A-1210 Wien (AT)
(72) Erfinder: Balik, Kurt, Ing., A-1210 Wien (AT)
(74) Vertreter: Rippel, Andreas, Dipl.-Ing.

(56) Entgegenhaltungen:
- GB-A- 331 070
- GB-A- 958 810
- US-A- 4 671 490

## Beschreibung

Gegenstand der Erfindung ist ein Membranventil, bei dem eine aus metallischem Werkstoff bestehende, mit einem metallischen Dichtkörper verschweißte Membrane mittels einer Spindel, oder einem Stößel gegenüber einem Ventilsitz bewegbar ist, wobei die Membrane außen mit einem Ringkörper und innen mit dem Dichtkörper verschweißt ist, und ferner sowohl der Außen- als auch der Innenrand der Membrane in Richtung zur Dichtkörperachse gebogen ist und der Außenrand der Membrane zum Ventilunterteil hin weist.

Insbesondere bezieht sich die Erfindung auf solche Membranventile, die in der Biotechnologie, in der Lebensmittelindustrie und in der Pharmazie eingesetzt und auch als aseptische Ventile bezeichnet werden.

Bei vielen bekannten Membranventilen besteht die Membran aus Naturkautschuk oder einem elastischen Kunststoff. Bei derartigen Materialien kommt es meistens sehr bald zu - vorerst nur kleinen - Rissen, in denen sich Bakterien ansetzen. Das Ventil wird daher, selbst bei sonst noch intakter Funktion, für die obgenannten Zwecke unbrauchbar.

Es werden als aseptische Ventile auch schon Balgventile mit einem Edelstahlbalg verwendet. Zwischen den Rippen des Balges sind jedoch sehr leicht Schmutzansammlungen möglich und auch die Lebensdauer eines Balges ist sehr begrenzt. Bei Beschichtung des Metallbalges mit z.B. Teflon entstehen zusätzlich die gleichen Probleme wie bei Verwendung von Kunststoffmembranen.

In den US-Patentschriften US-A-4 671 490 und US-A-4 750 709 sind Membranventile beschrieben, bei denen eine Verschweissung der Membrane offenbar hauptsächlich deshalb erfolgt, um die aus einzelnen Blättern bestehende Membrane zusammenzuhalten. Die Membrane wird nämlich sowohl außen als auch innen zusätzlich geklemmt, um die Schweißstelle von Beanspruchung während der Betätigung des Ventiles zu entlasten. Die Absätze und Spalten insbesondere an den Einspannstellen der Membrane begünstigen aber die Bildung von Bakteriennestern.

In der GB-A-958 810 ist ein Membranventil mit den in vorliegender Beschreibung einleitend aufgezählten Merkmalen beschrieben, das insbesondere für atomare Anlagen bestimmt ist. Die Verschweißung der Membran erfolgt dabei derart, daß bei entsprechender Verwendung auch bei diesem Ventil Bakteriennester entstehen würden.

Die Erfindung hat es sich zum Ziel gesetzt, ein Membranventil zu schaffen, das die aufgezeigten Nachteile nicht aufweist, das demnach möglichst kleine produktberührte Oberflächen besitzt und bei dem die Bildung von Bakteriennestern praktisch ausgeschlossen ist.

Erreicht wird dieses Ziel bei einem Membranventil der eingangs genannten Art dadurch, daß auch der Innenrand der Membrane zum Ventilunterteil hin weist und ferner die produktberührten Flächen der Membrane einerseits und des Dichtkörpers sowie des Ringkörpers andererseits absatzlos ineinander übergehen.

Bei einem erfindungsgemäßen Membranventil sind die produktberührten metallischen Flächen der Membran und des Dichtkörpers glatt und überdies klein, sodaß es nicht zur Bildung von Bakteriennestern kommen kann, wobei die Haltbarkeit eines solchen Ventiles im Vergleich zu bekannten Ventilen wesentlich gesteigert werden konnte.

Zur Erreichung eines fließenden Überganges bei möglichst hoher Dichtwirkung ist es zweckmäßig, wenn der Dichtkörper als Metall auf Metall dichtender Dichtkegel ausgebildet ist.

Die Beanspruchung der metallischen Membrane ist insbesondere dann besonders klein zu halten, wenn der mit der Membrane verschweißte Ringkörper zwischen Flanschen des Ventilober- und Ventilunterteiles gehalten ist.

Eine einfache und glatte Ausbildung des Ventilunterteiles ergibt sich insbesondere dann, wenn dieser als im wesentlichen ebene Platte ausgebildet ist.

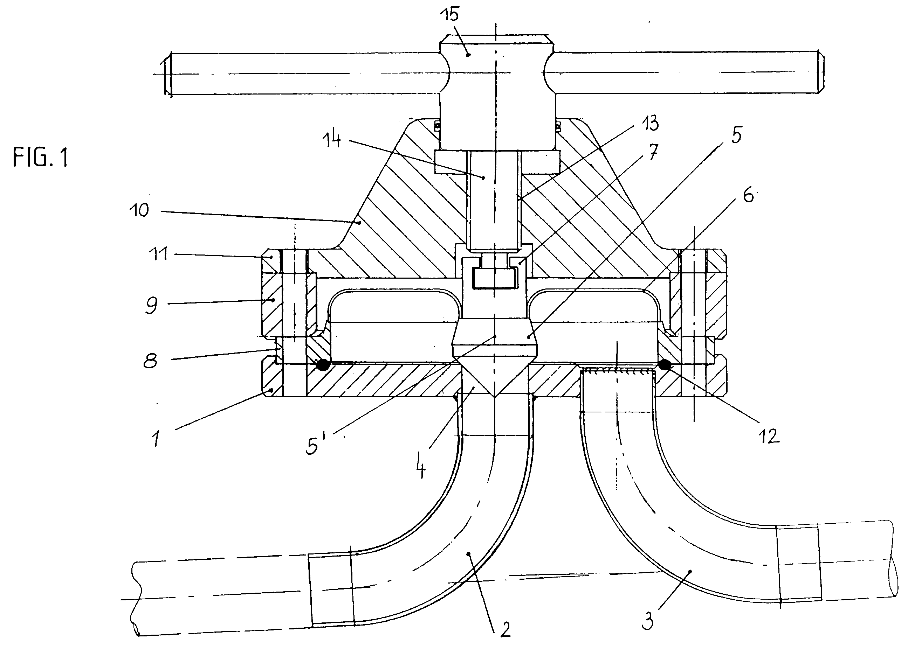

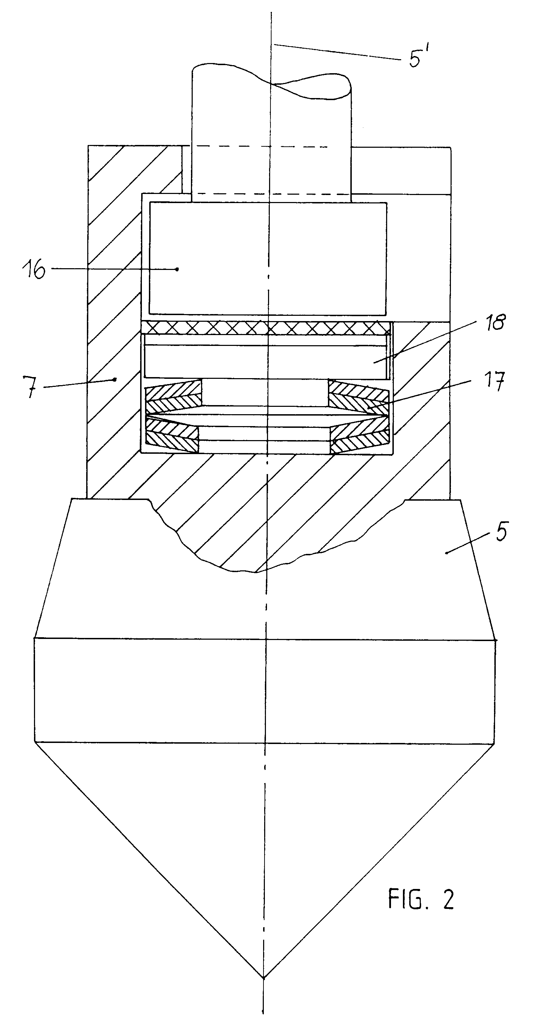

Nachstehend ist die Erfindung an Hand eines in der Zeichnung dargestellten Ausführungsbeispieles näher beschrieben. Dabei zeigt Fig.1 einen Querschnitt durch ein erfindungsgemäßes Membranventil und Fig.2 stellt in vergrößertem Maßstab eine mögliche Ausbildung der federnden Verbindung zwischen der Ventilspindel und dem Dichtkörper dar.

Gemäß Fig.1 sind in einem als Platte 1 ausgebildeten Ventilunterteil Rohrbögen 2 und 3 für die Zu- und Abfuhr des zu fördernden Mediums angeordnet. Die Bohrung 4 für den Anschluß des Rohrbogens 2 ist als Ventilsitz für einen kegeligen Dichtkörper 5 ausgebildet, dessen nach oben ragender Stil 7 etwa mittig durch eine zur Dichtungsachse 5′ hin gebogene Membran 6 durchgesteckt und mit dieser absatzlos verschweißt ist. Außen ist die Membran 6 ebenfalls zur Dichtkörperachse 5′ hin gebogen und mit einem Ringkörper 8 absatzlos verschweißt.

Der Ventilunterteil 1, der Dichtkörper 5, die Membrane 6 und der Ringkörper 8 bestehen aus Edelstahl.

Der mit der Membrane 6 verbundene Ringkörper 8 ist zwischen dem an seinem äußeren Umfang als Flansch ausgebildeten Ventilunterteil 1 und einem Flansch 11 eines Ventiloberteiles 10 unter Zwischenschaltung eines Zwischenflansches 9 mittels nicht eingezeichneter Schrauben gehalten. Zwischen dem Ventilunterteil 1 und dem Ringkörper 8 ist eine statische, teflonisierte Elastomerdichtung 12 eingelegt.

Im Ventiloberteil 10 ist ein Gewinde 13 eingeschnitten, in das eine Ventilspindel 14 eingeschraubt ist, die mit einer Handhabe 15 versehen ist. Ein am unteren Ende der Ventilspindel 14 angeordneter Hammerkopf 16 ist in eine entsprechende Ausnehmung des Stieles 7 eingesetzt. Bei Verdrehen der Ventilspindel 14 kann daher der Dichtkörper 5 vom Ventilsitz der Bohrung 4 abgehoben bzw. auf diesen aufgesetzt werden. Die Membrane 6 bewegt sich dabei mit und schließt nach außen zu völlig ab.

Es ist aus der Zeichnung ohne weiteres ersichtlich, daß die produktberührten Flächen des Ventilunterteiles 1, des Dichtkörpers 5, der Membrane 6 und des Ringkörpers 8 völlig glatt sind und somit die Bildung von Bakteriennestern praktisch ausgeschlossen ist.

Die vergrößerte Darstellung des Dichtkörpers 5 gemäß Fig.2 zeigt, daß in der Aufnahme des Stieles 7 für den Hammerkopf 16 Tellerfedern 17 und Zwischenscheiben 18 eingelegt sind. Dadurch können eventuelle Längenänderungen, die bei Benützung des erfindungsgemäßen Ventiles unter höheren Temperaturen möglich wären, ausgeglichen werden.

Im Rahmen der Erfindung sind zahlreiche Abänderungen möglich. So ist keinesfalls die Anordnung einer Ventilspindel erforderlich, statt dieser könnte bei pneumatischer oder elektrischer Steuerung auch ein Stößel verwendet werden. Auch ist die kegelige Form des Dichtkörpers 5 nicht zwingend.

## Patentansprüche

1. Membranventil, bei dem eine aus metallischem Werkstoff bestehende, mit einem metallischen Dichtkörper (5) verschweißte Membrane (6) mittels einer Spindel (14) oder einem Stößel gegenüber einem Ventilsitz (4) bewegbar ist, wobei die Membrane (6) außen mit einem Ringkörper (8) und innen mit dem Dichtkörper (5) verschweißt ist, und ferner sowohl der Außen- als auch der Innenrand der Membrane (6) in Richtung zur Dichtkörperachse (5') gebogen ist und der Außenrand der Membrane (6) zum Ventilunterteil (1) hin weist, **dadurch gekennzeichnet**, daß auch der Innenrand der Membrane (6) zum Ventilunterteil (1) hin weist und ferner die produktberührten Flächen der Membrane (6) einerseits und des Dichtkörpers (5) sowie des Ringkörpers (8) andererseits absatzlos ineinander übergehen.

2. Membranventil nach Anspruch 1, **dadurch gekennzeichnet**, daß der Dichtkörper (5) als Metall auf Metall dichtender Dichtkegel ausgebildet ist.

3. Membranventil nach einem der vorstehenden Ansprüche, **dadurch gekennzeichnet**, daß der mit der Membrane (6) verschweißte Ringkörper (8) zwischen Flanschen des Ventilober- und Ventilunterteiles (1,10) gehalten ist.

4. Membranventil nach einem der vorstehenden Ansprüche, **dadurch gekennzeichnet**, daß der Ventilunterteil (1) als im wesentlichen ebene Platte ausgebildet ist.

## Claims

1. Diaphragm valve in which a diaphragm (6) made of metal and welded to a metallic sealing element (5) can be moved, by means of a spindle (14) or a tappet, on a valve seat (4), with the diaphragm (6) welded to a ring-type body (8) on the outside and to the sealing body (5) on the inside, with the outer and inner edges of the diaphragm (6) curving towards the axis of the sealing body (5'), and with the outer edge of the diaphragm (6) pointing towards the lower part of the valve (1), **characterized in that** the inner edge of the diaphragm (6) also points towards the lower part of the valve (1), and in that those surfaces of the diaphragm (6) on the one hand and of the sealing body (5) and ring-type body (8) on the other hand which are in contact with the product blend smoothly.

2. Diaphragm valve according to claim 1, **characterized in that** the sealing body (5) is a conical nipple sealing metal on metal.

3. Diaphragm valve according to one of the above claims, **characterized in that** the ring-type body (8) welded to the diaphragm (6) is held between flanges of the upper and lower parts (1, 10) of the valve.

4. Diaphragm valve according to one of the above claims, **characterized in that** the lower part of the valve (1) is essentially an even plate.

## Revendications

1. Soupape à diaphragme, dont le diaphragme (6) métallique, soudé à un élément d'étanchéité (5), est mobile, à l'aide d'une broche (14) or un coulisseau, vers un siège de soupape (4); dans laquelle le diaphragme (6) est soudé à un élément annulaire (8) à l'extérieur et à l'élément d'étanchéité (5) à l'intérieur, et dans laquelle le bord extérieur et le bord intérieur du diaphragme (6) sont courbés vers l'axe de l'élément d'étanchéité (5') et le bord extérieur du diaphragme (6) est orienté vers la partie inférieure (1) de la soupape, **caracterisée en ce que** le bord intérieur du diaphragme (6) est de même orienté vers la partie inférieure (1) de la soupape et que toutes les surfaces du diaphragme (6) d'un côté et de l'élément d'étanchéité (5) ainsi que de l'élément annulaire (8) de l'autre côté qui touchent le produit forment un seul tout.

2. Soupape à diaphragme selon revendication 1, **caraterisée en ce que** l'élément d'étanchéité (5) est une bague bicône serrant métal à métal.

3. Soupape à diaphragme selon l'une des revendications ci-dessus, **caracterisée en ce que** l'élément annulaire (8), soudé au diaphragme (6), est tenu entre les brides de la partie supérieure et de la partie inférieure (1, 10) de la soupape.

4. Soupape à diaphragme selon l'une des revendications ci-dessus, **caracterisée en ce que** la partie inférieure (1) de la soupape est une plaque essentiellement plane.
